# EUROPÄISCHE PATENTSCHRIFT

(11) **EP 0 792 761 B1**
(45) Veröffentlichungstag und Bekanntmachung des Hinweises auf die Patenterteilung: **04.10.2001**
(21) Anmeldenummer: 96119830.6
(22) Anmeldetag: 11.12.1996
(51) Int. Cl.: B60C 25/14

(54) **Vorrichtung zur Verbesserung des Laufverhaltens von Fahrzeugrädern durch Verbesserung des Sitzes der Wulstpartien auf der Felge**
Device to improve the behaviour of automobile tyres by improving the location of tyre beads on the rim
Dispositif d'amélioration du comportement des pneumatiques automobiles par un meilleur positionnement des talons des pneus sur la jante

(30) Priorität: 08.01.1996 DE 19600323
(43) Veröffentlichungstag der Anmeldung: 03.09.1997
(73) Patentinhaber: Schenck RoTec GmbH, 64293 Darmstadt (DE)
(72) Erfinder: Hans, Didier, 95290 L' Isle Adam (FR)

(56) Entgegenhaltungen:
- DE-A- 3 442 561
- FR-A- 2 733 462
- US-A- 2 647 564
- US-A- 3 581 795

## Beschreibung

Die Erfindung betrifft eine Vorrichtung zur Verbesserung des Laufverhaltens von Fahrzeugrädern gemäß dem Oberbegriff des Patentanspruchs 1.

Bei der Montage von Fahrzeugreifen auf eine Radfelge kommt es vor, daß die Reifenwülste nicht richtig an den Felgenhörnern anliegen, so daß der gewünschte Rundlauf nur unzureichend zustande kommt. Weiterhin erfolgt ein einwandfreier Sitz des Reifens teilweise erst nach einer erheblichen Fahrstrecke, die den Reifen durch seine Eigenbewegung erst richtig in die Aussparung der Felge hineindrückt. Da hierdurch die Unwuchtverhältnisse von Reifen und Felge verändert werden, wäre die nach der Montage erfolgte Auswuchtung fehlerhaft und müßte nach einer gewissen Fahrtzeit nochmals durchgeführt werden.

Zur Verbesserung des Sitzes der Wulstpartien eines Pkw-Reifens auf der Felge ist aus der gattungsgemäßen DE 34 42 561 C2 eine Vorrichtung bekannt, durch die der Sitz unmittelbar nach der Montage verbessert werden kann. Dazu wird vorgeschlagen, die Seitenflächen des Pkw-Reifens durch zwei Druckringe nach innen zu drükken, so daß die seitlichen Wulstflächen von den Felgenrändern im Bereich des Felgenhorn abheben, während die radial innenliegenden Flächen auf ihrem Sitz verbleiben. Dadurch sollen sich die Wulstflächen paßgenau in die Aussparungen im Bereich der Felgenhörner anlegen. Dabei sind die Durchmesser der Druckringe auf den mittleren Durchmesser der Reifenseitenflächen der jeweils behandelnden Radtype angepaßt. Dies hat den Nachteil, daß für jeden Radtyp mit unterschiedlichem mittleren Seitenflächendurchmesser eine andere Vorrichtung verwendet bzw. die Ringe dieser Vorrichtung ausgetauscht werden müssen.

Zur Demontage von Lastwagenreifen von den Felgen ist aus der US 2,647,564 eine Vorrichtung vorbekannt, die an unterschiedliche Felgendurchmesser anpaßbar ist. Dazu sind auf einer Kreisbahn sechs flache schmale Finger angeordnet, die zwischen die Reifenwulst und den Felgenrand schiebbar sind und so den Wulstrand vom Felgenhorn nach innen drücken, um anschließend von der Felge getrennt werden zu können. Zur Anpassung an verschiedene Felgendurchmesser sind die Finger an jeweils einem Druckarm befestigt, der in radialer Richtung auf einer sternförmig angeordneten Führung verschiebbar ist, so daß die Finger verschiedene Kreisbahnen unterschiedlicher Durchmesser bilden können. Allerdings sind zwischen den Fingern relativ große Zwischenräume vorgesehen, die sich bei einer Radialverschiebung nach außen noch vergrößern.

Der Erfindung liegt daher die Aufgabe zugrunde, eine Vorrichtung zur Verbesserung des Sitzes der Wulstpartien eines Reifens auf einer Felge so zu verbessern, daß damit auch Räder anderer Abmessungen bearbeitet werden können. Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß mit einer derartigen Einrichtung nicht nur Fahrzeugräder mit unterschiedlichen Felgendurchmessern, sondern auch gleich große Räder mit unterschiedlichen Querschnittsverhältnissen wie heute gebräuchliche Niederquerschnittsreifen bearbeitbar sind. Eine derartige Vorrichtung ist auch leicht in eine Serienfertigung integrierbar, da die kontinuierliche Radialverstellung der Druckringe leicht und genau automatisierbar ist, so daß auch nacheinander durchlaufende Fahrzeugräder unterschiedlicher Durchmesser oder Querschnittsverhältnisse bearbeitbar sind. Dies hat darüber hinaus noch den Vorteil, daß bei einer derartigen kontinuierlichen Verstellbarkeit der Druckringe keine Einrichtarbeiten an der Vorrichtung vorgenommen werden müssen.

Die Erfindung wird anhand eines Ausführungsbeispiels, das in der Zeichnung dargestellt ist, näher erläutert. Es zeigen:
- Fig. 1:: eine schematische Vorrichtung zur Verbesserung des Laufverhaltens mit automatisierter Radialverstellmöglichkeit;
- Fig. 2:: die Draufsicht von schematisch angeordneten Teilringelementen eines ringförmigen Druckelements und
- Fig. 3:: schematisch den Radialverstellbereich einer Vorrichtung zur Verbesserung des Laufverhaltens von gebräuchlichen Fahrzeugrädern.

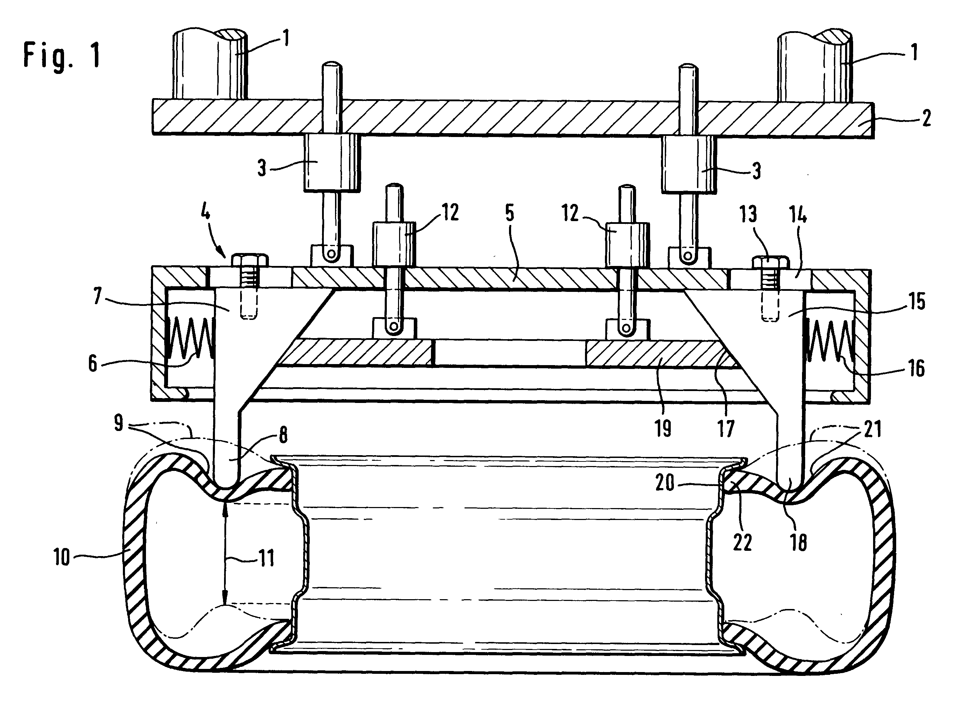

In Fig. 1 der Zeichnung ist in schematischer Darstellung eine Einrichtung zur Verbesserung des Laufverhaltens von Pkw-Fahrzeugrädern dargestellt, bei der ein kontinuierlich verstellbares ringförmiges Druckelement die Seitenwände 9, 21 eines mit Druckluft befüllten Reifens 10 so weit nach innen verformt, bis die außenliegenden Flächen der Reifenwülste 22 von ihren Sitzflächen abheben. Dazu ist an einem festen Geräterahmen 1 eine stationäre Halteplatte 2 befestigt, an der zwei Druckmittelzylinder 3 angebracht sind, die den beweglichen Teil 5 der Vorrichtung vertikal nach unten gegen das Fahrzeugrad bewegen. Dabei kann die Vorrichtung aber auch vertikal angeordnet sein, um die Seitenwände 9, 21 der Fahrzeugräder zu verformen.

Der bewegliche Teil der Vorrichtung besteht im wesentlichen aus den Teilringelementen 7, 15 , die die Reifenseitenflächen 21 verformen und der Verstellvorrichtung 4, die eine selbsttätige Anpassung an die unterschiedlichen Reifengrößen vornimmt. Die Verstellvorrichtung besteht aus einem horizontal angeordneten zylindrischen Rahmenteil 5, der mit den beiden Druckmittelzylindern 3 kraftschlüssig verbunden ist. Im zylindrischen Rahmen 5 sind zwölf Teilringelemente 7, 15 angerodnet, die nach unten auf den Reifen 10 zeigend eine längliche abgerundete Drucknase 8, 18 aufweisen, die auf die Reifenseitenfläche 9, 21 auftrifft.

Im oberen Bereich besitzen die Teilringelemente 7, 15 nach innen gerichtet eine verjüngende Schräge 17, die zu einer kontinuierlichen Radialverstellung dient. Die Teilringelemente 7, 15 sind an dessen horizontale Abschlußfläche mit einem Befestigungselement in Form einer Schraube 13 versehen, das das Teilringelement 7, 15 am zylindrischen Rahmen 5 in vertikaler Richtung fixiert. Das Befestigungselement 13 ist in einem am zylindrischen Rahmen 5 befindlichen Langloch 14 angebracht, so daß eine Führung in radialer Richtung entsteht.

Im Innenbereich des zylindrischen Rahmens 5 ist ein vertikal verstellbarer Innenring 19 angeordnet, der nach außen hin ebenfalls über eine schräge Abschlußkante verfügt, gegen die sich die Schrägen der Teilringelemente 7, 15 abstützen. Der Innenring 19 ist gegenüber dem zylindrischen Rahmen 5 mit Verstellelementen 12 versehen, die als Hydraulik-, Druckluftzylinder oder Linearmotor ausgebildet sein können. Diese Verstellelemente 12 werden synchron so gesteuert, daß sie den Innenring 19 in vorbestimmten Bereichen nach oben oder unten bewegen. Dadurch werden die einzelnen Teilringelemente 7, 15 entsprechend der Schrägen kontinuierlich nach außen bzw. nach innen verschoben. Zur Verschiebung nach innen sind noch Druckfederelemente 6, 16 vorgesehen, die beim Absenken des Innenrings 19 die Teilringelemente 7, 15 nach innen drücken und somit eine Durchmesserverringerung des ringförmigen Druckelements bewirken.

Zur kontinuierlichen Anpassung des Durchmessers des ringförmigen Druckelements an den gewünschten mittleren Durchmessers der zu verformenden Reifenseitenwände sind auch andere bekannte Ausführungsarten denkbar. So könnte auch jedes Teilringelement mit einem Linearantrieb versehen sein, der die Teilringelemente in Richtung des axialen Mittelpunkts verschiebt, so daß bei einer synchronen Steuerung der Linearantriebe eine kontinuierliche Durchmesserveränderung des Druckelementes erreichbar wäre. Es sind aber auch bekannte Verstelleinrichtungen denkbar, die nach dem Prinzip eines Bohrfutters für Bohrmaschinen oder eines Backenfutters für Drehmaschinen arbeiten und eine Durchmesserveränderung eines ringförmigen Druckelements erreichen. Darüber hinaus sind aber auch hydraulische-, pneumatische- oder hebelartige Verstellmechanismen denkbar, durch die der Durchmesser des Druckelementes verändert werden kann.

Soll nun ein Fahrzeugrad zum Verbessern des Reifensitzes auf der Felge mit der Vorrichtung zum Verbessern des Laufverhaltens von Fahrzeugrädern bearbeitet werden, wird zunächst das Fahrzeugrad montiert, mit Druckluft versehen und zentrisch unter der Vorrichtung fixiert. Dies kann sowohl manuell als auch automatisch nach bekannten Verfahren erfolgen. Zur Feststellung des erforderlichen Ringdurchmessers wird zunächst die bekannte Reifen- oder Radgröße eingegeben oder durch Sensoren selbsttätig erfaßt. Durch eine nicht dargestellte Recheneinrichtung ist daraus der mittlere Reifenwanddurchmesser ermittelbar.

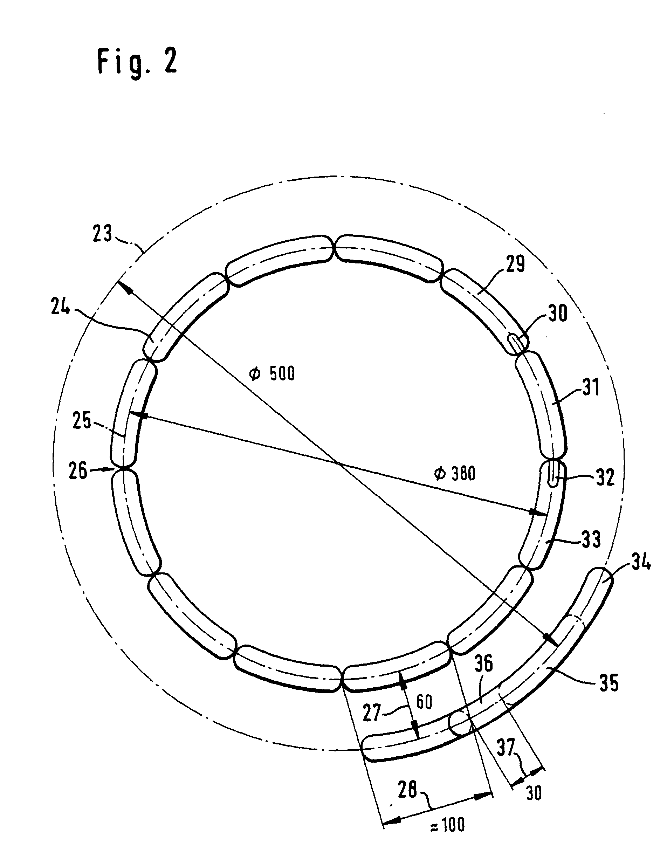

Nach Fig. 2 der Zeichnung ist ein ringförmiges Druckelement 26 mit zwölf Teilringelementen 24 zum Bearbeiten von 13 bis 17 Zoll Fahrzeugrädern schematisch dargestellt. Dabei besitzt jedes Teilringelement 24 in radialer Richtung eine Länge 28 von etwa 100 mm und eine Breite von beispielsweise ca. 20 bis 30 mm. Es sind aber auch mehr oder weniger Teilringelemente 24 denkbar, wobei sich allerdings vorzugsweise eine Aufteilung von zwölf Teilringelementen als günstig erwiesen hat. Die Teilringelemente 24 sind in radialer Richtung gekrümmt, wobei der Krümmungsradius vorteilhafter Weise zwischen dem minimalen und dem maximalen Verstellradius gewählt wird. Bei entsprechend großer Anzahl von Teilringelementen könnte jedes auch gerade ausgebildet sein, wobei allerdings die Gesamtanordnung weitgehend ein kreisförmiges Druckelement bildet. Die einzelnen Teilringelemente 24 sind zur Reifenfläche hin an allen Kanten abgerundet, um eine Beschädigung des Reifens beim Eindrücken zu verhindern. Die einzelnen Teilringelemente 24 sind kreisförmig in Umfangsrichtung hintereinander angeordnet und bilden insgesamt das ringförmige Druckelement 26.

Um bei einer radialen Verstellung der einzelnen Teilringelemente nach außen die dann entstehenden Zwischenräume 37 zu vermeiden, können auch Ausgleichsmittel wie überlappende Zungen 36, 34 an jedem zweiten Teilringelement 35 vorgesehen werden. Derartige Zungen 34, 36 sind in Fig. 2 der Zeichnung an einem Teilringelement 35 angedeutet. Diese überlappenden Zungen 34, 36 könnten als Metallblechzungen ausgebildet sein, deren Innenkontur an der Außenkontur der Teilringelemente 24, 35 angepaßt und mit diesen verbunden würden. Bei einer Radialverschiebung der Teilringelemente 24, 35, 33 nach außen würden die nicht mit Zungen 34, 36 versehenen Teilringelemente 33 in der Innenkontur der Zungen 34, 36 auseinandergleiten, so daß immer eine ringförmige Druckfläche ohne Zwischenräume erhalten bliebe. Da bei Teilringelementen 24, 33 ohne überlappende Zungen Zwischenräume von ca. 30 mm entstehen könnten, wäre mindestens eine Länge von 40 mm vorzusehen.

Eine derartige zwischenraumfreie Anordnung der Teilringelemente könnte auch durch Ausgleichsmittel wie ineinander verschiebbare Passungen erfolgen die mindestens 30 mm ineinander verschiebbar wären. Eine derartige Ausführung der Passung ist in Fig. 2 der Zeichnung an einem Teilringelement 31 dargestellt, an dessen Enden zwei gleichartige Zapfen 32, 30 angeordnet sind, die in entsprechende Aussparungen an den anschließenden Teilringelementen 29, 33 hineinragen und formmäßig an diese angepaßt sind. Bei der zwischenraumfreien Anordnung kann auch jeweils an einem Ende jedes Teilringelementes eine Zunge oder Zapfen vorgesehen werden, der mit dem nachfolgenden Ende des folgenden Teilringelementes überlappt bzw. in deren Aussparung eingreifen würde.

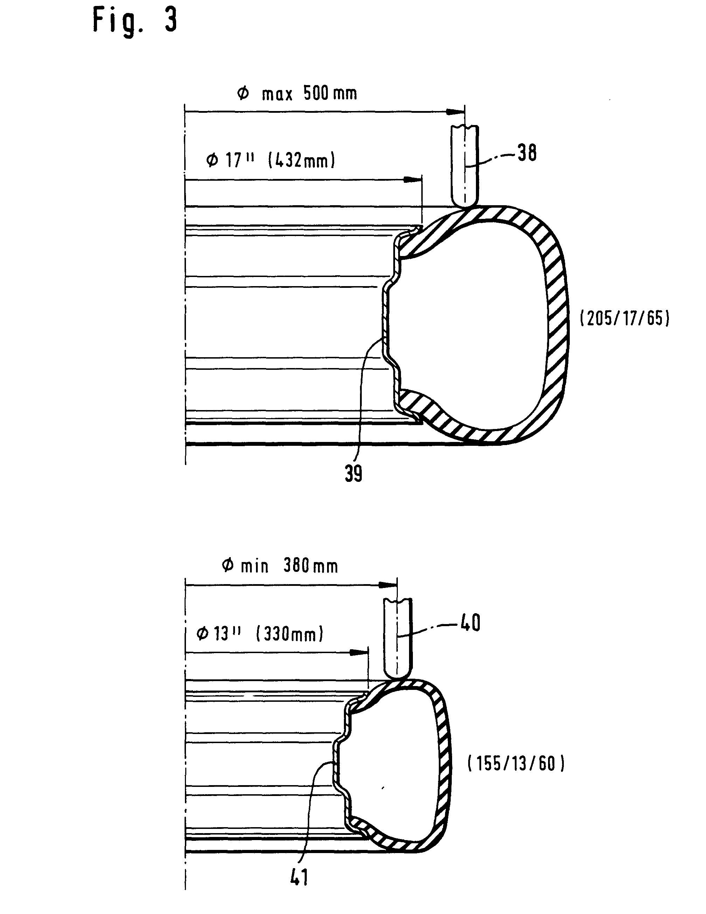

Nach Fig. 3 der Zeichnung sind die derzeit gängigen Rad- und Reifengrößen angegeben, für die die Verstellvorrichtung 4 in jedem Fall vorgesehen sein sollte. Es sind aber auch größere Verstellbereiche für Spezialradgrößen ausführbar. Derzeit werden Serienfahrzeuge mit Radfelgen von 13 bis 17 Zoll ausgestattet. Bei normalen Querschnittsverhältnissen von 60 bis 65 % ergeben sich daraus mittlere Durchmesser 23, 25, 38, 40 der Reifenseitenwände von ca. 380 bis 500 mm, woraus sich für jedes Teilringelement 7, 15, 24 ein radialer Verschiebeweg 27 von ca. 60 mm ergibt. Für eine 13-Zoll-Felge 41 und einem Querschnittsverhältnis der Reifen von 60 % würde sich ein mittlerer Reifenwanddurchmesser 40 von 380 mm und für eine 17-Zoll-Felge 39 bei einem Querschnittsverhältnis von 65 % ein mittlerer Reifenwanddurchmesser 28 von ca. 500 mm ergeben. Danach sind z. B. die Schrägen 17 der Verstelleinrichtung 4 nach Fig. 1 der Zeichnung zu bemessen. Bei Reifen 10 mit anderen Querschnittsverhältnissen, wie z. B. Niederquerschnittsreifen, sind auch andere mittlere Seitenwanddurchmesser ermittel- und einstellbar. Dazu muß die Verstelleinrichtung 4 in die für die entsprechende Reifengröße ermittelte Stellung gesteuert werden, so daß sich der gewünschte Ringdurchmesser ergibt. Ist der vorgesehene Ringdurchmesser des Druckelementes 26 eingestellt, wird die Verstelleinrichtung 4 durch die Druckmittelzylinder 3 so weit gegen die Reifenseitenwand 9, 21 bewegt, daß sich diese nach innen so weit verformt, bis die außenliegende Wulstfläche von dem Felgenhorn abhebt. Dabei wird die Seitenwand 9, 21 gegen den Innendruck des Reifens 10 aber nur so weit verformt, daß die Reifenwülste 22 nicht von den radial innenliegenden Sitzflächen 20 abheben. Dies entspricht etwa der Maulweite 11 des inneren Wulstabstandes der beiden Reifenwülste 22. Durch ein derartiges Anheben der Reifenwülste 22 rutschen diese durch den inneren Druck des Reifens 10 paßgenau in die dafür vorgesehenen Felgenaussparungen, so daß sich das Laufverhalten der Fahrzeugräder durch den symmetrischeren Sitz der Reifen auf der Felge verbessert. Dabei muß der Druck auf die Seitenflächen nicht in einem Schritt erfolgen, sondern kann auch in mehreren Teil-schritten mit unterschiedlichen Amplituden und/oder verschiedenen Frequenzen erfolgen.

Zu einer Verbesserung des Laufverhaltens muß aber jede Seitenfläche 9, 21 des Reifens 10 gegenüber der Felge 39, 41 verformt werden. Dazu zeigt die Fig. 1 der Zeichnung lediglich eine Vorrichtung, mit der nur eine Seite des Fahrzeugrades bearbeitet werden kann. Es ist deshalb bei einer einfachen Ausführung der Vorrichtung denkbar, daß das Fahrzeugrad nach dem Bearbeiten der einen Seite gedreht wird. Bei einer bevorzugten Ausführungsart würde allerdings an jeder Radseite eine derartige Verstell- und Druckvorrichtung angeordnet, so daß zwischen diesen das Rad fixiert würde und beide Verstell- und Druckvorrichtungen gleichzeitig je eine Reifenwand bearbeiten würden.

Eine derartige Vorrichtung könnte auch in eine Radmontagevorrichtung, insbesondere in einer Reifenfüllglocke oder Auswuchtvorrichtung integriert werden, so daß eine vollautomatische Radbearbeitung mit Radauswuchtung möglich ist. Dies würde zu einer erheblichen Kosten- und Zeiteinsparung und Qualitätsverbesserung bei der Reifenmontage führen.

## Patentansprüche

1. Vorrichtung zur Verbesserung des Laufverhaltens von Fahrzeugrädern, die mit unter Innendruck stehenden Fahrzeugreifen bestückt ist und bei der ein ringförmiges Druckelement (26) vorgesehen ist, das mindestens eine Seitenwand (9, 21) des Pkw-Reifens (10) nach innen so weit verformt, daß die radial außenliegenden Wulstflächen des Pkw-Reifens (10) von der Felgenaußenwand abheben, **dadurch gekennzeichnet, daß** das ringförmige Druckelement (26) aus kreisförmig in Umfangsrichtung hintereinander angeordneten Teilringelementen (7, 15, 24) besteht, die mindestens radial verschiebbar sind, wobei zur zwischenraumfreien Radialverschiebung der Teilringelemente (31, 35) an diesen bzw. zwischen diesen Ausgleichsmittel (30, 32, 34, 36) vorgesehen sind, und **daß** die Berührungsflächen jedes Teilringelements (7, 15, 24) als abgerundete Drucknasen (8, 18) ausgebildet sind.

2. Vorrichtung nach Patentanspruch 1, **dadurch gekennzeichnet, daß** die Länge (28) jedes Teilringelementes (7, 15, 24) einem vorgebbaren Winkelteil eines Vollrings entspricht und dessen Radius mindestens dem des kleinsten zu bearbeitenden mittleren Reifenwandradius (25, 40) und höchstens dem des größten zu bearbeitenden mittleren Reifenwandradius (23, 38) entspricht.

3. Vorrichtung nach Patentanspruch 1, **dadurch gekennzeichnet, daß** jedes Teilringelement (7, 15, 24) radial gekrümmt oder gerade ausgebildet ist, wobei bei gerader Ausbildung eine entsprechend große Anzahl an Teilringelementen vorgesehen ist, die als Gesamtanordnung ein kreisförmiges Druckelement bilden.

4. Vorrichtung nach einem der vorhergehenden Ansprüche, **dadurch gekennzeichnet, daß** die Ausgleichsmittel als überlappende Zungen (34, 36) an jedem zweiten teilringelement (35) ausgebildet sind, deren Innenkontur an der Außenkontur der Teilringelemente (24, 35) angepaßt und mit diesem verbunden ist.

5. Vorrichtung nach einem der Ansprüche 1 bis 3, **dadurch gekennzeichnet, daß** die Ausgleichsmittel als ineinander schiebbare Passungen (30, 32) ausgebildet sind.

6. Vorrichtung nach einem der vorhergehenden Ansprüche, **dadurch gekennzeichnet, daß** die Berührungsflächen jedes Teilringelements (7, 15, 24) so ausgebildet sind, **daß** deren Breite nicht mehr als die Hälfte der Breite der Reifenseitenwand beträgt

7. Vorrichtung nach einem der vorhergehenden Ansprüche, **dadurch gekennzeichnet, daß** eine Verstelleinrichtung (4) vorgesehen ist, durch die der Durchmesser des ringförmigen Druckelements stufenlos vom kleinsten zu bearbeitenden mittleren Reifenwanddurchmessers (25, 31) bis zum größten mittleren Reifenwanddurchmesser (23, 38) verstellbar ist.

8. Vorrichtung nach einem der vorhergehenden Ansprüche, **dadurch gekennzeichnet, daß** die Radialverstellung mittels mechanischer, hydraulischer, pneumatischer oder elektrischer Verstellmittel erfolgt, wobei alle Teilringelemente (7, 15, 24) synchron in Richtung zur Radachse verstellbar sind.

9. Vorrichtung nach einem der vorhergehenden Ansprüche, **dadurch gekennzeichnet, daß** die Radialverstellung des Durchmessers des ringförmigen Druckelementes (26) selbsttätig erfolgt, wobei der einstellbare Durchmesser aufgrund vorgebbarer Reifen- und/oder Felgengröße erfolgt, oder wo die Reifengröße über Sensoren erfaßbar ist, aus dessen Werten der mittlere Reifenwanddurchmesser (23, 25, 38, 40) ermittelt wird, der dem einstellbaren mittleren Durchmesser des Druckelements (26) entspricht.

10. Vorrichtung nach einem der vorhergehenden Ansprüche, **dadurch gekennzeichnet, daß** die Vorrichtung aus einer Druck- und Verstelleinrichtung (4) besteht, die die Reifenseitenwand gegenüber einem Widerlager verformt oder aus zwei gegenüberliegenden Druck- und Verstelleinrichtungen (4) besteht, zwischen denen der Reifen (10) fixierbar ist.

11. Vorrichtung nach einem der vorhergehenden Ansprüche, **dadurch gekennzeichnet, daß** die Vorrichtung in einer Reifenmontage- und/oder Auswuchteinrichtung integriert ist.

## Claims

1. Device for improving the running behaviour of automobile wheels, which is equipped with automobile tyres under inner pressure, and wherein a ring-shaped pressure element (26) is provided, which deforms at least one side wall (9, 21) of the automobile tyre (10) inwards so far that the radially outer-lying bead surfaces of the automobile tyre (10) lift off from the rim outer wall, **characterised in that** the ring-shaped pressure element (26) consists of partial ring elements (7, 15, 24) positioned in a circular formation one after the other in circumferential direction, wherein these partial ring elements (7, 15, 24) are at least radially displaceable, wherein for the purpose of radial displacement of the partial ring elements (31, 35) without intermediate spaces, compensation means (30, 32, 34, 36) are provided between these / on these, and **in that** the contact surfaces of each partial ring element (7, 15, 24) are formed as rounded pressure noses (8, 18).

2. Device according to Claim 1, **characterised in that** the length (28) of each partial ring element (7, 15, 24) corresponds to a pre-determinable angular part of a full ring and the radius thereof corresponds at least to that of the smallest average tyre wall radius (25, 40) to be handled and at the most to that of the largest average tyre wall radius (23, 38) to be handled.

3. Device according to Claim 1, **characterised in that** each partial ring element (7, 15, 24) is radially bent or formed straight, wherein with a straight construction a correspondingly large number of partial ring elements is provided, which as a whole arrangement form a circular pressure element.

4. Device according to any one of the preceding claims, **characterised in that** the compensation means are formed as overlapping tongues (34, 36) on every second partial ring element (35), whose inner contour is adapted to the outer contour of the partial ring elements (24, 35) and is connected thereto.

5. Device according to any one of the Claims 1 to 3, **characterised in that** the compensation means are formed as interfitting means (30, 32) which can be pushed inside one another.

6. Device according to any one of the preceding claims, **characterised in that** the contact surfaces of each partial ring element (7, 15, 24) are formed in such a way that their width does not amount to more than half of the width of the tyre side wall.

7. Device according to any one of the preceding claims, **characterised in that** an adjusting device (4) is provided, by means of which the diameter of the ring-shaped pressure element can be continuously adjusted from the smallest average tyre wall diameter (25, 31) to be handled to the largest average tyre wall diameter (23, 38).

8. Device according to any one of the preceding claims, **characterised in that** the radial adjustment takes place by means of mechanical, hydraulic, pneumatic or electrical adjusting means, wherein all the partial ring elements (7, 15, 24) can be adjusted synchronously in the direction towards the wheel axis.

9. Device according to any one of the preceding claims, **characterised in that** the radial adjustment of the diameter of the ring-shaped pressure element (26) takes place automatically, wherein the adjustable diameter ensues on the basis of pre-specifiable tyre and / or rim size, or where the tyre size can be detected via sensors, from their values the average tyre wall diameter (23, 25, 38, 40) is determined, which corresponds to the adjustable average diameter of the pressure element (26).

10. Device according to any one of the preceding claims, **characterised in that** the device consists of a pressure and adjusting device (4), which deforms the tyre side wall opposed to an abutment or it consists of two opposed pressure and adjusting devices (4) between which the tyre (10) can be fixed.

11. Device according to any one of the preceding claims, **characterised in that** the device is integrated in a tyre assembly and / or balancing device.

## Revendications

1. Dispositif d'amélioration du comportement des roues de véhicules équipés de pneumatiques soumis à une pression interne et dans lequel est prévu un élément de pression annulaire (26), qui déforme au moins une paroi latérale (9, 21) du pneumatique d'automobile (10) vers l'intérieur jusqu'à ce que les surfaces externes du bourrelet du pneumatique d'automobile (10) se soulèvent de la paroi externe de la jante, **caractérisé par** le fait que l'élément de pression annulaire (26) est constitué d'éléments d'anneau partiel (7, 15, 24), disposés les uns derrière les autres sur la périphérie, qui peuvent être réglés au moins radialement , des moyens d'équilibrage (30, 32, 34, 36) étant prévus sur ou entre eux pour permettre le décalage radial sans espace intermédiaire des éléments d'anneau partiel (31, 35), et en ce que les surfaces de contact de chaque élément d'anneau partiel (7, 15, 24) sont constituées par des becs de pression arrondis (8, 18).

2. Dispositif selon la revendication 1, **caractérisé par** le fait que la longueur (28) de chaque élément d'anneau partiel (7, 15, 24) correspond à une section d'arc prédéterminée d'un anneau complet et dont le rayon correspond au moins au rayon moyen de paroi de pneumatique (25, 40) le plus petit à travailler et au plus au rayon moyen de paroi de pneumatique (23, 38) le plus grand à travailler.

3. Dispositif selon la revendication 1, **caractérisé par** le fait que chaque élément d'anneau partiel (7, 15, 24) est réalisé radialement courbé ou droit, une quantité relativement importante d'anneaux partiels étant prévue pour une réalisation droite, qui forment assemblés un élément de pression circulaire.

4. Dispositif selon l'une des revendications précédentes, **caractérisé par** le fait que les moyens d'équilibrage sont constitués par des languettes à recouvrement (34, 36) sur chaque second élément d'anneau partiel (35), dont le contour intérieur est adapté au contour externe des éléments d'anneaux partiels (24, 35) et qui sont reliés à ces derniers.

5. Dispositif selon l'une des revendications 1 à 3, **caractérisé par** le fait que les moyens d'équilibrage sont constitués de pièces d'ajustement pouvant s'emboîter (30, 32).

6. Dispositif selon l'une des revendications précédentes, **caractérisé par** le fait que les surfaces de contact de chaque élément d'anneau partiel (7, 15, 24) sont constituées de telle façon que leur largeur ne dépasse pas la moitié de la largeur de la paroi latérale du pneumatique.

7. Dispositif selon l'une des revendications précédentes, **caractérisé par** le fait qu'un dispositif de réglage (4) est prévu, par lequel le diamètre de l'élément de pression annulaire peut être réglé sans palier du plus petit diamètre moyen de paroi de pneumatique à travailler (25, 31) au plus grand diamètre moyen de paroi de pneumatique à travailler (23, 38).

8. Dispositif selon l'une des revendications précédentes, **caractérisé par** le fait que le réglage radial s'effectue par des moyens mécaniques, hydrauliques, pneumatiques ou électriques, tous les éléments d'anneaux partiels (7, 15, 24) pouvant être réglés de façon synchrone dans le sens de l'axe de la roue.

9. Dispositif selon l'une des revendications précédentes, **caractérisé par** le fait que le réglage radial du diamètre de l'élément annulaire de pression (26) se fait automatiquement, le diamètre se réglant en fonction des dimensions prédéterminées du pneumatique ou de la jante, ou bien la taille du pneumatique étant détectée par des capteurs, à partir des valeurs desquelles le diamètre moyen de paroi de pneumatique (23, 25, 38, 40) est obtenu, qui correspond au diamètre moyen réglable de l'élément de pression (26).

10. Dispositif selon l'une des revendications précédentes, **caractérisé par** le fait que le dispositif est constitué par un système de pression et de réglage (4), qui déforme la paroi latérale du pneumatique par rapport à un contre-appui ou par deux systèmes de pression et de réglage en vis-à-vis (4), entre lesquels peut être fixé le pneumatique (10).

11. Dispositif selon l'une des revendications précédentes, **caractérisé par** le fait que le dispositif est intégré à un monte-pneu ou à un dispositif d'équilibrage.
